Europäisches Patentamt

European Patent Office

Office européen des brevets

(11) Veröffentlichungsnummer: **0 002 772**
**A1**

(12) ## EUROPÄISCHE PATENTANMELDUNG

(21) Anmeldenummer: 78101746.2

(51) Int. Cl.²: **B 23 K 9/08**

(22) Anmeldetag: 18.12.78

(30) Priorität: 22.12.77 DE 2757309

(43) Veröffentlichungstag der Anmeldung: 11.07.79
Patentblatt 79/14

(84) Benannte Vertragsstaaten: BE DE FR GB IT NL SE

(71) Anmelder: Industrie-Werke Karlsruhe Augsburg
Aktiengesellschaft, Gartenstrasse 71, D-7500
Karlsruhe 1 (DE)

(72) Erfinder: Altstetter, Manfred, Ing. grad., Amselweg 12,
D-8901 Wulfertshausen (DE)
Erfinder: Ganowski, Franz-Josef, Dipl.-Ing., Haus
Nr. 46, D-8901 Maingründel (DE)
Erfinder: Pache, Norbert, Zusmarshauser Weg 7a,
D-8900 Augsburg (DE)

(74) Vertreter: Zahn, Roland, Dipl.-Ing. et al,
Gartenstrasse 71, D-7500 Karlsruhe 1 (DE)

(54) Vorrichtung zum Schweissen metallischer Werkstücke mit magnetisch bewegtem Lichtbogen.

(57) Beim Schweißen mit magnetisch bewegtem Lichtbogen (6) hat es sich gezeigt, daß der Lichtbogen zeitweise auch zwischen Werkstück (1) und Magnetspule (5)
brennt, so daß keine optimale Schweißqualität erreicht
wurde.

Zur Vermeidung dieser «Kurzschlüsse» (7) ist vorgesehen, die Magnetspule (5) selbst und/oder ihre Aufhängung zu isolieren.

Vorrichtung zum Schweißen metallischer Werkstücke
mit magnetisch bewegtem Lichtbogen

---

Die vorliegende Erfindung bezieht sich auf eine Vorrichtung
zum Schweißen metallischer Werkstücke mit magnetisch bewegtem Lichtbogen, wobei das Magnetfeld durch in der Schweißebene angeordnete, die Schweißkantennahtbahn umgebende
Magnete erzeugt wird.

Das Schweißen mit magnetisch bewegtem Lichtbogen ist ein
Verfahren, auf dessen Basis bereits erste vollautomatische Produktionsmaschinen arbeiten und ihre Bewährungsprobe bestanden haben. Es stellt eine sinnvolle Ergänzung des Abbrenn-, Stumpf-, Rollennaht-, Wig-, Mig-, Mag- und Reibstumpfschweißen dar und wird meist zum Schweißen von Rohren oder Werkstücken mit rohrförmigem Ansatz verwendet. Diese Teile müssen jedoch nicht drehsymmetrisch sein.

Das Ziel einer optimalen Investition, minimaler Aufwand bei größtem wirtschaftlichen Nutzen kann nur erreicht werden, wenn das neue Verfahren eingebettet in die anderen, oben erwähnten Techniken gesehen wird.

Seine Vorteile sind eindeutig. Sie sind sowohl wirtschaftlicher als auch schweißtechnischer Natur und stellen eine Synthese der bisher bekannten Vorteile des Widerstand-Lichtbogen- und Reibschweißens dar.

Die zwei grundsätzlich möglichen Anordnungen beim Schweißen mit magnetisch bewegtem Lichtbogen sind:

a) Das Schweißen mit einem sich bewegenden Lichtbogen zwischen den zu verbindenden Werkstücken.

b) Das Schweißen mit einem zwischen einer nicht abschmelzenden Hilfselektrode und den Werkstücken sich bewegenden Lichtbogen.

Die vorliegende Erfindung bezieht sich auf die unter a) genannte Ausführung, bei der die zu verschweißenden Werkstücke während des Schweißvorgangs in einem bestimmten Abstand zueinander liegen. Zwischen diesen auf unterschiedlichem Potential liegenden Werkstücken brennt der Lichtbogen und wird in Richtung der Schweißnaht durch Einwirkung eines extern angelegten Magnetfeldes bewegt.

In der Praxis sind nun Fehlschweißungen aufgetreten, deren Ursache darin zu suchen war, daß der über den Luftspalt und damit den Lichtbogen fließende elektrische Strom sich einen anderen Strompfad suchte und von einem Werkstück zur Magnetspule übersprang, um von hier zum zweiten Werkstück abzufließen.

Die der vorliegenden Erfindung zugrundeliegende Aufgabe ist es, eine Vorrichtung der eingangs genannten Art so zu modifizieren, daß die genannten Ursachen für Fehlschweißungen eliminiert sind.

Diese Aufgabe wird dadurch gelöst, daß Mittel vorgesehen sind, die ein Überspringen des Lichtbogens vom Werkstück zu einem Magneten verhindern.

Die Erfindung wird im Folgenden anhand der Zeichnungen näher erläutert. Hierbei werden zwei Ausführungsbeispiele im Sinne der Unteransprüche beschrieben, wobei explizit darauf hingewiesen wird, daß diese beiden Varianten sowohl isoliert als auch kumulativ, d.h. nebeneinander, angewandt werden können.

Fig. 1    zeigt eine erste Variante der erfindungsgemäß vorgesehenen Maßnahmen zur Vermeidung von Schweißstromnebenschlüssen;

Fig. 2    zeigt eine zweite Variante der erfindungsgemäß vorgesehenen Maßnahmen zur Vermeidung von Schweißstromnebenschlüssen.

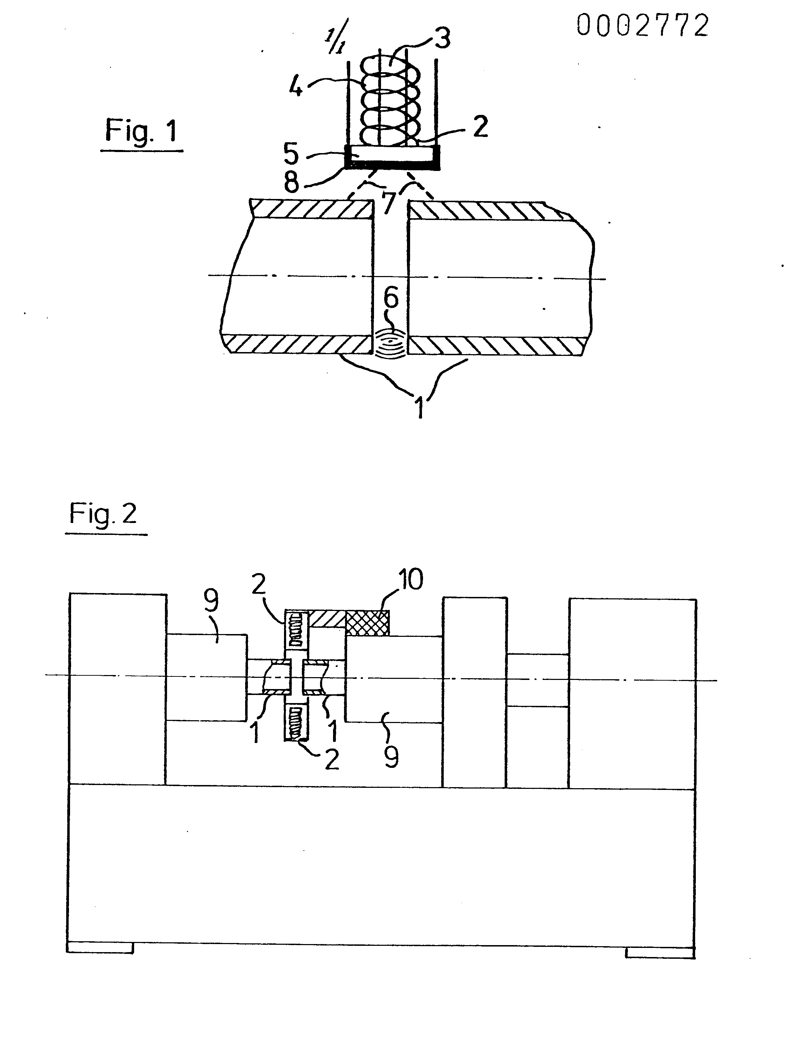

In Fig. 1 sind zwei mit einem bestimmten Abstand zueinander fest eingespannte Rohrstücke 1 dargestellt. Am Umfang des radialen Luftspalts zwischen den beiden Rohrstücken sind Einzelmagnete 2 angeordnet und so gewickelt, daß sie mit gleichen Magnetpolen, insbesondere Südpolen, die geschlossene Schweißkanten-Nahtbahn umgeben. Aus Gründen der Übersichtlichkeit ist nur einer dieser Magnete dargestellt. Er besteht aus einem magnetisierbaren Kern 3 mit einer das Magnetfeld erzeugenden Wicklung 4. Nach außen ist dieser Einzelmagnet durch einen Ringdeckel 5 abgekapselt.

Am unteren Luftspalt dieser dargestellten Rohrstücke ist ein Lichtbogen 6 eingezeichnet, wie er im Soll-Zustand brennen soll.

Am oberen Luftspalt ist gestrichelt eine Verbindungslinie 7 vom linken Rohrstück zum Magneten 2 und von diesem zum rechten Rohrstück dargestellt. Diese Verbindungslinie 7 ist stellvertretend gezeichnet für einen auf diesem Weg brennenden und damit Fehlschweißungen verursachenden Lichtbogen.

Erfindungsgemäß ist jedoch der dargestellte Einzelmagnet mit seinem dem Luftspalt bzw. den Rohrstückenden benachbarten Teil mit einer Isolierschicht 8 umgeben, so daß kein Stromfluß über dieses Teil mehr möglich ist. Die spezielle Ausgestaltung der Isolierschicht kann dabei auf verschiedene Art und Weise erfolgen. Beispielsweise ist es denkbar, den Einzelmagneten an dem den Rohrstückenden gegenüberliegenden Teil mit einer Isolierkappe abzuschließen. Oder man umspritzt dieses Teil mit einem isolierenden Pulver.

In Fig. 2 ist ein kompletter Maschinenaufbau einer Einrichtung zum Schweißen mit magnetisch bewegtem Lichtbogen dargestellt. Der im gegebenen Zusammenhang interessierende spezielle Teil umfaßt die beiden sich im vorgegebenen Abstand voneinander fest eingespannten Rohrstücke 1, sowie die radial angeordneten Einzelmagnete 2. Die Aufhängung dieser Einzelmagnete 2 gegenüber den Spannvorrichtungen 9 für die Rohrstücke 1 besteht bei den bekannten Aufbauten aus normalen Schraubverbindungen zwischen speziellen metallischen Formteilen.

Es hat sich nun in der Praxis gezeigt, daß auf Grund dieser metallischen (galvanischen) Durchverbindungen der Lichtbogenstrom vom einen Rohrstück über einen Einzelmagnet und über dessen Aufhängung zur Spannvorrichtung für das zweite Rohrstück und damit zu diesem selbst fließen kann. Erfindungsgemäß ist dies nunmehr dadurch vermieden, daß zwischen der Aufhängung für die Einzelmagneten und dem übrigen Maschinenbau ein aus Isoliermaterial bestehendes Formteil 10 zwischengefügt ist. Damit ist eine galvanische Durchverbindung zwischen den zu verschweißenden Rohrstücken auf einem anderen als dem direkten über den Lichtbogen führenden Weg unterbunden.

Es versteht sich von selbst, daß die anhand der Fig. 1 und 2 beschriebenen Sicherheitsmaßnahmen auch kumulativ nebeneinander angewandt werden können.

Mit den beiden detailliert beschriebenen Maßnahmen wurden erste Erfahrungen mit den auf dem Markt befindlichen Anlagen in der Weise umgesetzt, daß aufgetretene Mängel auf Grund erfinderischer und einfacher Verbesserungen der vorhandenen Konzeptionen in Zukunft vermieden werden.

# PATENTANSPRÜCHE

1. Vorrichtung zum Schweißen metallischer Werkstücke mit magnetisch bewegtem Lichtbogen, wobei das Magnetfeld durch in der Schweißebene angeordnete, die Schweißkantennahtbahn umgebende Magnete erzeugt wird,

dadurch gekennzeichnet,

daß Mittel vorgesehen sind, die ein Überspringen des Lichtbogens vom Werkstück zu einem Magneten verhindern.

2. Vorrichtung nach Anspruch 1,

dadurch gekennzeichnet,

daß die Magnete an dem den zu schweißenden Werkstücken gegenüberliegenden Ende mit Isoliermaterial abgedeckt sind.

3. Vorrichtung nach Anspruch 1 oder 2,

dadurch gekennzeichnet,

daß die Magnete unter Einfügung eines isolierenden Formteils fixiert sind.

Fig. 1

Fig. 2

## EINSCHLÄGIGE DOKUMENTE

| Kategorie | Kennzeichnung des Dokuments mit Angabe. soweit erforderlich. der maßgeblichen Teile | betrifft Anspruch |
|---|---|---|
| | DE - A - 2 311 673 (ZENTRAL INSTITUT FUER SCHWEISSTECHNIK DER DDR) <br> * Seite 3, Zeilen 18-20 * | 1-3 |
| | US - A - 2 743 342 (U.S.A.) <br> * Spalte 2, Zeilen 57-59 * | 1,3 |
| | FR - A - 2 298 399 (SECHERON) <br> * Seite 1, Zeilen 9-38 * | 1,3 |
| A | DE - B - 1 156 182 (UNION CARBIDE) <br> * Spalte 5, Zeilen 46-68; Spalte 4, Zeilen 15-23 * | 1,3 |
| A | US - A - 1 980 477 (THE LINCOLN) <br> * Seite 1, rechte Spalte, Zeilen 102-106 * | 1,3 |
| A | US - A - 2 936 363 (U.S.A.) <br> * Spalte 2, Zeilen 24-27 * | 1,3 |

**KLASSIFIKATION DER ANMELDUNG (Int. Cl.)**

B 23 K 9/08

**RECHERCHIERTE SACHGEBIETE (Int. Cl.)**

B 23 K 9/08
9/06

**KATEGORIE DER GENANNTEN DOKUMENTE**

X: von besonderer Bedeutung

A: technologischer Hintergrund

O: nichtschriftliche Offenbarung

P: Zwischenliteratur

T  der Erfindung zugrunde liegende Theorien oder Grundsätze

E: kollidierende Anmeldung

D· in der Anmeldung angeführtes Dokument

L: aus andern Gründen angeführtes Dokument

&. Mitglied der gleichen Patent-familie.   übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-03-1979 | HOORNAERT |